# EUROPEAN PATENT APPLICATION

(11) **EP 2 527 349 A1**
(43) Date of publication of application: **28.11.2012**
(21) Application number: 10843944.9
(22) Date of filing: 19.11.2010
(51) Int. Cl.: C07F 9/50

(54) **PROCESS FOR PRODUCTION OF TRIALKYLPHOSPHINE**

(30) Priority: 19.01.2010 JP 2010008651
(71) Applicant: Central Glass Company, Limited, Yamaguchi 755-0001 (JP)
(72) Inventor: IDE, Toshihisa, Yamaguchi 755-0001 (JP); IRIE, Tatsuya, Yamaguchi 755-0001 (JP)
(74) Representative: Sauer, Philippe
(86) International application number: PCT/JP2010/070650
(87) International publication number: WO 2011/089780

(57) **Abstract**

A production process of a trialkylphosphine of the general formula (3) according to the present invention includes: a first step of forming a trialkylphosphine of the general formula (3) by reaction of an organic metal compound of the general formula (1) and an organic phosphorous compound of the general formula (2) in an ether solvent having a difference in boiling point with the trialkylphosphine formed such that the difference in boiling point is in a range of 0°C to 20°C; a second step of forming a silver complex of the general formula (4) by absorption of a gas phase containing the trialkylphosphine of the general formula (3) formed in the first step into an aqueous solution of AgI and KI, and then, obtaining the silver complex of the general formula (4) by filtration; a third step of generating a gas product by heating the silver complex of the general formula (4) obtained in the second step, in a metallic reaction vessel, at a temperature range of 170°C to 350°C in a reduced pressure atmosphere of 1.333×10⁻⁷ MPa to 6.133×10⁻² MPa; and a fourth step of cooling the gas product of the third step at a very low temperature range of -196°C to -50°C to thereby trap the trialkylphosphine of the general formula (3) out of the gas product.

## Description

### Technical Field

The present invention relates to a process for production of a trialkylphosphine, which is useful as a film forming material for semiconductor manufacturing and as a ligand of a transition metal complex catalyst.

### Background Art

A trialkylphosphine is a compound represented by the general formula: R₃P (where R is alkyl) and, in recent years, has increasingly been used as a film forming material in a semiconductor manufacturing field in addition to conventional use as a ligand of a transition metal complex catalyst.

As the most common processes for synthesis of trimethylphosphine as one example of the trialkylphosphine, there are known: a process of reacting PH₃ with CH₃Cl in a gas phase at 275°C under a pressurized condition of 1.961×10⁻³ MPa in the presence of an activated carbon catalyst (Patent Document 1); and a process of reacting phosphorous trichloride with methylmagnesium chloride in a tetraglyme solvent and immobilizing the reaction product as a (CH₃)₃PAgI complex by treatment with an aqueous solution of AgI and KI (Non-Patent Document 1). Further, there has recently been reported a process of reacting triphenyl phosphite and methylmagnesium bromide, both of which are known as mild reagents, and then, distilling the reaction product (Non-Patent Document 2). In this reaction, ether solvents such as dibutyl ether, diglyme (DGM), tetraglyme, tetrahydrofuran (THF) and diethyl ether are usable as a reaction solvent; and not only the above-mentioned Grignard reagent but also alkyllithium are useable as an alkylation agent.

However, the selectivity of the reaction is low so that the yield of P(CH₃)₃ is at an extremely low yield of 6% in the process of Patent Document 1. In the process of Non-Patent Document 1, there are problems that the yield of P(CH₃)₃ is lowered due to decomposition of the silver complex by HCl generated from the phosphorous trichloride; and AgI used for the immobilization of P(CH₃)₃ is very expensive. In the process of Non-Patent Document 2, the solvent having a large difference in boiling point with P(CH₃)₃, such as dibutyl ether or tetraglyme, needs to be selected and used since the reaction product is directly subjected to distillation after the reaction. This results in a problem that P(CH₃)₃ cannot be distilled at around its boiling point (38°C) in the distillation operation due to the formation of a complex between the Mg component, the solvent and P(CH₃)₃ in the reaction system so that it is necessary to perform the distillation operation slowly at a higher temperature of 140°C. The temperature control range is narrow in order to prevent bumping during the distillation operation.

In fact, there has not been found an industrially efficient process for production of a trialkylphosphine such as trimethylphosphine.

### Prior Art Documents

### Patent Documents

Patent Document 1: Japanese Patent No. 2641526

### Non-Patent Documents

Non-Patent Document 1: Inorganic Synthesis, 1967, 9, 59
Non-Patent Document 2: J. Chem. Soc., Dalton Trans., 1985, 2025

### Summary of the Invention

### Problems to be Solved by the Invention

It is an object of the present invention to provide a process for high-yield industrial production of a trialkylphosphine such as P(CH₃)₃.

### Means for Solving the Problems

The present inventors have made extensive research to achieve the above object and, as a result, has obtained the following findings. The present invention is based on these findings.
[1] By the use of a reaction solvent having a boiling point close to that of a trialkylphosphine formed during reaction of an organic metal compound containing at least one of a magnesium halide, a zinc halide and lithium with an organic phosphorous compound, it is possible to prevent bumping in the subsequent distillation operation.
[2] It is possible to easily separate the thus-formed trialkylphosphine from the reaction solvent by immobilizing the trialkylphosphine as a silver complex (solid state) through treatment of the reaction liquid with an aqueous solution of AgI and KI.
[3] It is possible to separate the trialkylphosphine from AgI by thermal decomposition of the immobilized silver complex in a reduced pressure atmosphere.
[4] The expensive AgI remaining as a residue can be reused in the next batch.

Namely, there is provided according to the present invention a process for producing a trialkylphosphine of the general formula (3), comprising: a first step of forming a trialkylphosphine of the general formula (3) by reaction of an organic metal compound of the general formula (1) and an organic phosphorous compound of the general formula (2) in an ether solvent having a difference in boiling point with the trialkylphosphine formed such that the difference in boiling point is in a range of 0°C to 20°C; a second step of forming a silver complex of the general formula (4) by absorption of a gas phase containing the trialkylphosphine of the general formula (3) formed in the first step into an aqueous solution of AgI and KI, and then, obtaining the silver complex of the general formula (4) by filtration; a third step of generating a gas product by heating the silver complex of the general formula (4) obtained in the second step, in a metallic reaction vessel, at a temperature range of 170°C to 350°C in a reduced pressure atmosphere of 1.333×10⁻⁷ MPa to 6.133×10⁻² MPa; and a fourth step of cooling the gas product of the third step at a very low temperature range of -196°C to -50°C to thereby trap the trialkylphosphine of the general formula (3) out of the gas product

R-M (1)

where R is a straight or branched C₁-C₆ alkyl group; and M is either a magnesium halide, a zinc halide and lithium

P-(OR')₃ (2)

where R' is a straight or branched C₁-C₁₂ alkyl group or at least one C₅-C₁₈ aryl group selected from the group consisting of phenyl, pyridyl, diphenyl, dipyridyl, terphenyl and terpyridyl, each of which may independently have, at any position on an aromatic ring, a substituent selected from the group consisting of C₁-C₆ alkyl groups, C₁-C₆ fluoroalkyl groups and halogen atoms,

PR₃ (3)

where R is the same as that in the general formula (1)

R₃PAgI (4)

where R is the same as that in the general formula (1).

It is preferable that R is methyl in the general formula (1); R' is phenyl in the general formula (2); the heating temperature is approximately 280°C in the third step. Further, it is preferable that AgI generated in a solid phase as a by-product of the third step is used for the formation of the silver complex in the second step.

### Detailed Description of the Invention

Hereinafter, the present invention will be described below in detail.

In the first step, a trialkylphosphine of the general formula (3) is formed by reaction of an organic metal compound of the general formula (1) and an organic phosphorus compound of the general formula (2) in a reaction solvent.

R-M (1)

In the general formula (1), R is a straight or branched C₁-C₆ alkyl group; and M is either a magnesium halide, a zinc halide and lithium.

P-(OR')₃ (2)

In the general formula (2), R' is a straight or branched C₁-C₁₂ alkyl group or at least one C₅-C₁₈ aryl group selected from the group consisting of phenyl, pyridyl, diphenyl, dipyridyl, terphenyl and terpyridyl, each of which may independently have, at any position on an aromatic ring, a substituent selected from the group consisting of C₁-C₆ alkyl groups, C₁-C₆ fluoroalkyl groups and halogen atoms.

PR₃ (3)

In the general formula (3), R is the same as that in the general formula (1).

Examples of the organic metal compound of the general formula (1) are: organic magnesium reagents such as methylmagnesium chloride, methylmagnesium bromide, methylmagnesium iodide, ethylmagnesium chloride, ethylmagnesium bromide, ethylmagnesium iodide, propylmagnesium chloride, propylmagnesium bromide, propylmagnesium iodide, butylmagnesium chloride, butylmagnesium bromide, butylmagnesium iodide, pentylmagnesium chloride, pentylmagnesium bromide, pentylmagnesium idodide, hexylmagnesium chloride, hexylmagensium bromide and hexylmagensium idodide; organic lithium reagents such as methyllithium, ethyllithium, propyllithium, butyllithium, pentyllithium and hexyllithium; and organic zinc reagents such as methylzinc chloride, ethylzinc chloride, propylzinc chloride, butylzinc chloride, pentylzinc chloride and hexylzinc chloride. Among others, organic magnesium reagents are preferred in terms of reaction handling, availability and cost efficiency.

Examples of the organic phosphorous compound of the general formula (2) are: trialkylphosphites such as trimethylphosphite, triethylphosphite, tripropylphosphite and tributylphosphite; and triarylphosphites such as triphenylphosphite, tripyridylphosphite, tris(diphenyl)phosphite, tris(dipyridyl)phosphite, tris(terphenyl)phosphite, tris(terpyridyl)phosphite, tritolylphosphite, trixylylphosphite, tris(trimethylphenyl)phosphite and tris(chlorophenyl)phosphite. It is preferable to use triarylphosphites, each of which is a highly electrophilic compound. Among others, triphenylphosphite is particularly preferred in terms of availability and cost efficiency.

Preferred examples of the reaction solvent used in the first step are ether solvents such as dibutyl ether, isopropyl ether, n-propyl ether, dimethoxymethane, ethyl methyl ether, diglyme (DMG), tetraglyme, tetrahydrofuran (THF) and diethyl ether. In order to prevent bumping during the subsequent distillation operation, it is preferable that the reaction solvent has a boiling point close to that of the trialkylphosphine formed. For example, diethyl ether can suitably be used in the case of producing P(CH₃)₃. The difference in boiling point between the reaction solvent and the trialkylphosphine formed is preferably of the order of 0°C to 50°C. It is particularly preferable that the difference in boiling point between the reaction solvent and the trialkylphosphine formed is of the order of 0°C to 20°C in order to prevent bumping more effectively.

The trialkylphosphine formed in the first step is contained in a gas phase.

In the second step, a silver complex of the general formula (4) is formed by absorption of the gas phase of the first step into an aqueous solution of AgI and KI, and then, recovered by ordinary pressure filtration or vacuum filtration with the use of a commercially available filtration equipment such as Kiriyama funnel.

R₃PAgI (4)

In the general formula (4), R is the same as that in the general formula (1).

As AgI is difficult to dissolve in water, the aqueous solution of AgI is prepared by dissolving AgI together with KI into water. The concentration of KI in the aqueous solution is preferably set to a saturation level of 5 mass% relative to water. In order to increase the solubility of AgI, the concentration of KI in the aqueous solution is more preferably set to 40 mass% or more relative to water. Further, the molar amount of AgI is preferably set to be 1 to 1.2 times of the molar amount of PR₃ formed. In view of the absorption efficiency of PR₃ and the rate of recovery of the complex by filtration, the amount of AgI is preferably of the order of about 1 mol/L.

In the third step, the silver complex obtained in the second step is sufficiently dried, and then, heated in a reduced pressure atmosphere within a sealable metallic reaction vessel so as to thereby generate a gas product.

At this time, the heating temperature is preferably set in such a manner that the temperature inside the reaction vessel is in a range of 170°C to 350°C. If the temperature is lower than 170°C, it is difficult to obtain the trialkylphosphine by decomposition of the silver complex. If the temperature exceeds 350°C, not only the silver complex but also the thus-generated trialkylphosphine are decomposed so that the purity of the target compound becomes extremely low. In order to obtain the trialkylphosphine with higher yield, it is more preferable that the temperature inside the reaction vessel is approximately 280°C.

Further, the pressure inside the reaction vessel is preferably set in such a manner that the inside of the reaction vessel is in a reduced pressure atmosphere of 1.333×10⁻⁷ MPa to 6.133×10⁻² MPa. If the pressure atmosphere is lower than 1.333×10⁻⁷ MPa, there is a possibility of pipe clogging caused by flying of a solid phase inside the reaction vessel due to sudden generation of the trialkylphosphine. If the pressure atmosphere exceeds 6.133×10⁻² MPa, the pressure inside the reaction vessel is too high to trap the trialkylphosphine. In order to obtain the trialkylphosphine with higher yield, it is more preferable that the inside of the reaction vessel is in a reduced pressure atmosphere of 1.333×10⁻⁵ MPa to 1.333×10⁻⁴ MPa.

Although there is no particular limitation on the reaction vessel used, it is preferable to use a container, a valve, a pipe etc. of stainless steel as the reaction vessel in terms of heat resistance, pressure resistance and corrosion resistance.

In the fourth step, the trialkylphosphine of the general formula (3) is trapped by cooling, at a very low temperature, the gas product generated in the third step.

The trapping temperature is preferably set to a very low temperature range of -196°C to -50°C, more preferably -80°C to -50°C. If the trapping temperature is lower than -80°C, it is likely that an inlet of the trap will be clogged due to solidification of the trialkylphosphine. If the trapping temperature exceeds -50°C, the trapping efficiency may be deteriorated due to pressure increase in the whole of the system.

Through the above steps, it is possible to obtain the trialkylphosphine of the general formula (3) with a purity of 99% or higher without the need to perform special operation such as super fractionation.

### Examples

The present invention will be described in more detail below by way of the following examples and comparative examples. It should be noted that the following examples are illustrative and are not intended to limit the present invention thereto.

### [Example 1]

As a reaction vessel, a 10-L flask (hereinafter referred to as "reaction vessel") was provided with a mechanical stirrer, a dropping funnel, a thermometer and aT-shaped connection tube. A Liebig condenser was attached to an end of the T-shaped connection tube of the reaction vessel. Another 10-L flask (hereinafter referred to "AgI immobilization vessel") was attached to the Liebig condenser and filled with 4.8 L of an aqueous solution containing 1115 g of AgI and 3300 g of KI. The aqueous solution was subjected to bubbling with N₂ for 12 hours.

The first step was performed as follows. First, 4.8 L of a diethyl ethyl solution of 3M methyl Grignard reagent (CH₃MgBr) was placed into the reaction vessel, followed by cooling the reaction vessel in a water bath with ice and slowly dropping 1285 g of triphenylphosphite from the dropping funnel into the reaction vessel. After the dropping of the triphenylphosphite, the resulting reaction liquid was stirred at room temperature for 12 hours under the flow of N₂. On the other hand, an aqueous NH₄Cl solution was subjected to bubbling with N₂ for 12 hours. After the completion of the reaction, the bubbled aqueous NH₄Cl solution was slowly dropped into the reaction vessel so as to quench the unreacted remaining Grignard reagent in the reaction liquid.

The second step was performed as follows after the dropping of the aqueous NH₄Cl solution. The reaction vessel was heated at 70°C for 24 hours so that the formed P(CH₃)₃ and diethyl ether were distilled into the AgI immobilization vessel and thereby absorbed into the aqueous solution of AgI and KI for conversion of the P(CH₃)₃ to a (CH₃)₃PAgI complex. The resulting solution of (CH₃)₃PAgI complex inside the AgI immobilization vessel was subjected to suction filtration, washed with a saturated aqueous KI solution, pure water, ethanol and diethyl ether in order of mention, and then, subjected to vacuum/reduced pressure drying. With this, the white (CH₃)₃PAgI complex was obtained.

Next, the third step was performed as follows. The obtained white (CH₃)₃PAgI complex was sealed into a 3-L flanged SUS container. A pressure gauge and a thermocouple were attached to the SUS container. The SUS container was then vacuumed to 1.333×10⁻⁵ MPa while heated at 100°C for 12 hours. The inside of the SUS container was heated at 280°C for 36 hours in a vacuum atmosphere.

The fourth step was finally performed so that the generated P(CH₃)₃ was trapped by cooling at -80°C.

The reaction process was completed at the time the difference in pressure between the reaction vessel side and the trap side disappeared. There was yielded 220 g of P(CH₃)₃ with a purity of 99.1%. The total yield was 70% relative to the triphenylphosphite dropped into the reaction vessel. Further, 810 g of the reaction residue was recovered. The reaction residue was identified as AgI by X-ray diffraction pattern analysis.

### [Comparative Example 1]

P(CH₃)₃ was produced in the same manner as in Example 1, except that phosphorous trichloride was used in place of the triphenyl phosphite. In this comparative example, the total yield was significantly deteriorated to 40%.

### [Comparative Example 2]

P(CH₃)₃ was produced in the same manner as in Example 1, except that the formed P(CH₃)₃ was obtained by heating as it was without performing the second and later steps. In this comparative example, the total yield was 68%. However, the purity was at an extremely low level of 23% because the diethyl ether used as the reaction solvent was contained as an impurity. It was difficult to separate this impurity.

### [Comparative Example 3]

P(CH₃)₃ was produced in the same manner as in Example 1, except that dibutyl ether was used in place of the diethyl ether. In this comparative example, it was necessary to set the heating temperature to 140°C or higher during the distillation operation. The distillation operation was not performed stably due to bumping.

### [Example 2]

P(CH₃)₃ was produced in the same manner as in Example 1, except that the pressure inside the reaction vessel was set to 1.333×10⁻⁷ MPa in the third step. In this example, an outlet of the reaction vessel was frequently clogged so that it was impossible to stably produce P(CH₃)₃. Further, the total yield was 68%; and the purity was 98.9% in this example.

### [Example 3]

P(CH₃)₃ was produced in the same manner as in Example 1, except that the pressure inside the reaction vessel was set to 6.000×10⁻² MPa in the third step. In this example, the total yield was 64%; and the purity was 99.0%.

### [Example 4]

P(CH₃)₃ was produced in the same manner as in Example 1, except that the reaction temperature was set to 200°C in the third step. In this example, the total yield was 63%; and the purity was 98.7%.

### [Example 5]

P(CH₃)₃ was produced in the same manner as in Example 1, except that the reaction temperature was set to 320°C in the third step. In this example, the total yield was 68%; and the purity was 99.0%.

### [Comparative Example 4]

P(CH₃)₃ was produced in the same manner as in Example 1, except that the pressure inside the reaction vessel was set to 1.333×10⁻¹ MPa in the third step. In this comparative example, the total yield was 38%; and the purity was 88.4%. Both of the yield and the purity were significantly deteriorated.

### [Comparative Example 5]

P(CH₃)₃ was produced in the same manner as in Example 1, except that the reaction temperature was set to 150°C in the third step. In this comparative example, there occurred no increase in the pressure inside the reaction temperature. The total yield was merely 10%.

### [Comparative Example 6]

P(CH₃)₃ was produced in the same manner as in Example 1, except that the reaction temperature was set to 360°C in the third step. In this comparative example, the total yield was 68%. However, the purity was significantly deteriorated to 78.5% due to decomposition of the target compound during the reaction.

### [Example 6]

P(CH₃)₃ was produced in the same manner as in Example 1, except that the trapping temperature was set to -193°C in the fourth step. In this example, the total yield was 69%; and the purity was 99.0%.

### [Example 7]

P(CH₃)₃ was produced in the same manner as in Example 1, except that the trapping temperature was set to -50°C in the fourth step. In this example, the total yield was 64%; and the purity was 99.1%.

### [Comparative Example 7]

P(CH₃)₃ was produced in the same manner as in Example 1, except that the trapping temperature was set to -20°C in the fourth step. In this comparative example, the total yield was 37%; and the purity was 97.0%. Both of the yield and the purity were significantly deteriorated.

### [Example 8]

P(CH₃)₃ was produced in the same manner as in Example 1, except that the AgI recovered in Example 1 was used as that in the AgI immobilization vessel. In this example, the total yield was 68%; and the purity was 99.3%.

### [Example 9]

The reaction process was repeated 10 cycles with the use of the recovered AgI in the same manner as in Example 2. In every cycle, the total yield was in a range of 68 to 72%; and the yield was in a range of 99.0 to 99.3%.

As described above, it is possible according to the present invention to industrially efficiently produce the trialkylphosphine with high yield and high purity.

Although the present invention has been described with reference to the above embodiments, various modifications and variations of the above embodiments can be made based on the knowledge of those skilled in the art without departing from the scope of the present invention.

## Claims

1. A process for producing a trialkylphosphine of the general formula (3), comprising:
a first step of forming a trialkylphosphine of the general formula (3) by reaction of an organic metal compound of the general formula (1) and an organic phosphorous compound of the general formula (2) in an ether solvent having a difference in boiling point with the trialkylphosphine formed such that the difference in boiling point is in a range of 0°C to 20°C;
a second step of forming a silver complex of the general formula (4) by absorption of a gas phase containing the trialkylphosphine of the general formula (3) formed in the first step into an aqueous solution of AgI and KI, and then, obtaining the silver complex of the general formula (4) by filtration;
a third step of generating a gas product by heating the silver complex of the general formula (4) obtained in the second step, in a metallic reaction vessel, at a temperature range of 170°C to 350°C in a reduced pressure atmosphere of 1.333×10⁻⁷ MPa to 6.133×10⁻² MPa; and
a fourth step of cooling the gas product of the third step at a very low temperature range of -196°C to -50°C to thereby trap the trialkylphosphine of the general formula (3) out of the gas product
R-M (1)
where R is a straight or branched C₁-C₆ alkyl group; and M is either a magnesium halide, a zinc halide and lithium
P-(OR')₃ (2)
where R' is a straight or branched C₁-C₁₂ alkyl group or at least one C₅-C₁₈ aryl group selected from the group consisting of phenyl, pyridyl, diphenyl, dipyridyl, terphenyl and terpyridyl, each of which may independently have, at any position on an aromatic ring, a substituent selected from the group consisting of C₁-C₆ alkyl groups, C₁-C₆ fluoroalkyl groups and halogen atoms,
PR₃ (3)
where R is the same as that in the general formula (1)
R₃PAgI (4)
where R is the same as that in the general formula (1).

2. The process for producing the trialkylphosphine according to claim 1, wherein R is methyl in the general formula (1).

3. The process for producing the trialkylphosphine according to claim 1 or 2, wherein R' is phenyl in the general formula (3).

4. The process for producing the trialkylphosphine according to any one of claims 1 to 3, wherein the silver complex is heated at approximately 280°C in the third step.

5. The process for producing the trialkylphosphine according to any one of claims 1 to 3, wherein AgI generated in a solid phase as a by-product of the third step is used for the formation of the silver complex in the second step.
